# EUROPÄISCHE PATENTANMELDUNG

(11) **EP 1 202 542 A1**
(43) Veröffentlichungstag der Anmeldung: **02.05.2002**
(21) Anmeldenummer: 00122323.9
(22) Anmeldetag: 23.10.2000
(51) Int. Cl.: H04M 7/00, H04M 3/51

(54) **Kommunikationssystem und Endgerät sowie Verfahren zum Betrieb eines Kommunikationssystems wobei Nutz- und Signalisierungsdaten und man-machine-interface Daten voneinander getrennt laufen**

(71) Anmelder: Ascom AG, 3000 Bern 14 (CH)
(72) Erfinder: Schmid, Kasimir, 3312 Fraubrunnen (CH)
(74) Vertreter: Patentanwälte Schaad, Balass, Menzl & Partner AG

(57) **Zusammenfassung**

Die Erfindung betrifft ein Kommunikationssystem für die Vermittlung von Sprache und/oder Daten mit einer ersten Steuereinheit (102,202,301,402,502,603) zur Steuerung von Kommunikationsverbindungen zwischen wenigstens zwei Endgeräten und einer funktional von der ersten Steuereinheit getrennten zweiten Steuereinheit (103,203,302/303,401,503,601) zur Realisierung der Interaktion zwischen Benutzer und Endgerät, wobei die erste und die zweite Steuereinheit miteinander zu kommunizieren imstande sind (JTAPI Schittstelle). Die Erfindung betrifft weiterhin ein Endgerät für den Betrieb mit einem solchen Kommunikationssystem und ein Verfahren für den Betrieb eines Kommunikationssystems. Durch die Erfindungsgemässe Trennung von Signalisierungsdaten zur Steuerung von Kommunikationsverbindungen und von MMI-Daten zur Realisierung einer Interaktion mit einem Benutzer können neue Leistungsmerkmale endgeräte- bzw. protokollunabhängig implementiert werden, wodurch ein Kommunikationssystem mit einer grossen Flexibilität bereitgestellt wird.

## Beschreibung

Die Erfindung betrifft ein Kommunikationssystem für die Vermittlung von Sprache und/oder Daten nach Anspruch 1 und ein Endgerät für den Betrieb mit einem solchen Kommunikationssystem nach Anspruch 11. Die Erfindung betrifft weiterhin ein Verfahren zum Betrieb eines Kommunikationssystems nach Anspruch 12.

In einem leitungsvermittelten und/oder paketvermittelten Kommunikationssystem für die Vermittlung von Sprache und Daten, z.B. PBX, LAN PBX, Public Switch, usw., wird die Kommunikation zwischen zwei oder mehr Endgeräten (Terminals) über eine Vermittlungsstelle mit Hilfe wenigstens eines Kommunikationsprotokolls, eines sogenannten Call-Control-Protokolls, gesteuert. Dieses dient der Signalisierung zwischen einem Terminal und der PBX. Es ist notwendig, um durch Übertragung von entsprechenden Signalisierungsdaten Verbindungsaufbauten und -abbauten sowie Leistungsmerkmalaktivierung zu synchronisieren zur Vorbereitung der eigentlichen Nutzdatenübertragung, z.B. Übertragung von Sprach- und Bilddaten sowie sonstigen Nutzinformationen. Beispiele für Call-Control-Protokolle in der klassischen Telefonie sind die ISDN-Protokolle (DSS1, QSIG) und für die Telefonie über Internetprotokoll basierende Netze (IP-Telefonie) H.323, H.450, SIP, MGCP.

Bei einem Kommunikationssystem mit PBX-Vermittlungseinheit (PBX: Private Branch Exchange) stellt die PBX-Einheit die klassischen Telefoniefunktionen bereit, insbesondere Anrufen, Vermitteln, Anrufweiterleitung, Makeln usw. An die PBX werden traditionelle Terminals (d.h. Telefonapparate mit analogen, ISDN- oder proprietären Schnittstellen) und Amtsleitungen angeschlossen. Die Amtsleitungen erlauben Verbindungen ins PSTN (Public Switched Telephone Network). Mehrere mit verschiedenen Kommunikationsprotokollen arbeitende Endgeräte können über sogenannte Gateways in das Kommunikationsnetz eingebunden werden. Beispielsweise kann mittels eines angeschlossen Voice Gateways eine Brücke in die IP-Welt (Internet-Protocol) hergestellt werden. Dieses ermöglicht, IP-Telefone an die PBX zu integrieren oder via IP-Netze nach aussen zu kommunizieren.

Bei modernen Kommunikationssystemen wird den Benutzern ein umfangreiches Paket von Leistungsmerkmalen zur Verfügung gestellt. Beispiele solcher Leistungsmerkmale sind Anrufumleitungen, Rufweiterschaltungen, Parken und Weitervermitteln von Anrufen. Normalerweise werden diese Leistungsmerkmale über das Call-Control-Protokoll als Zusatzleistungen bzw. sogenannte Supplementary Services signalisiert. Supplementary Services sind Dienste, welche die Telefonie-Grundleistungen wie Abheben, Auflegen, Wählen, Rufen ergänzen. Jedes Endgerät benötigt zur Realisierung solcher Leistungsmerkmale sogenannte MMI-Intelligenz (MMI: Man Machine Interface), d.h. eine gewisse Datenverarbeitungskapazität und entsprechende Datenverarbeitungsprogramme zur Realisierung der Schnittstelle Mensch-Maschine, um Benutzerinteraktionen zu ermöglichen. Beispielsweise wird über das MMI auf Eingaben des Benutzers das entsprechende Leistungsmerkmal aktiviert bzw. deaktiviert oder dem Benutzer signalisiert, wo im Kommunikationsprozess er sich befindet bzw. wie der Status der Anlage ist. Mit Hilfe der Schnittstelle Mensch-Maschine wird das zum Auf- und Abbau einer Kommunikationsverbindung dienende Kommunikationsprotokoll (Call-Control-Protokolls) abgebildet.

Nachteilig bei den bekannten Kommunikationssystemen ist, dass die Leistungsmerkmale protokoll- und damit auch terminalspezifisch sind. Damit ist bei einer Leistungserweiterung zur Realisierung entsprechender Benutzerinteraktion für jedes Protokoll eine Neuimplementierung der Leistungsmerkmale notwendig. Dies ist teuer, unflexibel, komplex und ergibt oft auch Probleme bei der Kompatibilität mit anderen Geräten, da sich die einzelnen Leistungsmerkmale mit den verschiedenen Protokollen nicht gleich abbilden lassen oder nicht unterstützt sind.

Call-Control-Protokolle sind meistens Peer-to-Peer-Protokolle, die eine direkte Kommunikation zweier "intelligenter" Terminals erlauben, d. h. ohne die Einbindung eines Servers. Daraus folgt, dass ein Terminal auch zur Realisierung der Benutzerinteraktion über gewisse Datenverarbeitungskapazität (RAM, ROM und Prozessorleistung) verfügen muss. Falls das Terminal über eine starke Funktionalität und Intelligenz im MMI-Bereich verfügt (Nummernspeicher, Anrufregister, Rufnummernanzeige, usw.) würde im Rahmen der Integration von Zusatzleistungen der Ressourcenbedarf dramatisch erweitert.

Durch die verteilte Intelligenz treten auch logistische Probleme auf. Ein Update der Firmware solcher Terminals muss entweder von Hand durchgeführt werden, wobei der Aufwand sehr gross und unkontrollierbar werden kann, oder in die Terminals müssen Firmware-Download-Vorkehrungen implementiert werden, was wiederum den Ressurcenbedarf steigert.

Die einzelnen Funktionsblöcke sind meistens fix an die entsprechende Terminal-Hardware gebunden. Funktionserweiterungen haben damit zur Folge, dass diese in mehreren Elementen implementiert werden müssen (z.B. MMI im Terminal, Call-Control-Protokoll im Terminal und in der PBX, usw.).

Das Call-Control-Protokoll ist massgeblich dafür bestimmend, welche Leistungsmerkmale in welchem Umfang auf einem Terminal angeboten werden können. Z. B. könnte ein zentraler Verzeichnisdienst nur mit einer mehr oder weniger proprietären Erweiterung angeboten werden.

Künftige Kommunikationssysteme werden vor allem auf paketvermittelten Netzwerken (z. B. Internet-Protokolle) basieren. Es ist abzusehen, dass mit künftigen Weiterentwicklungen laufend neue Call-Protokolle benutzt werden müssen. Es ist somit erforderlich, eine Vereinfachung im Sinne einer standardisierten Implementierung der Leistungsmerkmale bereitzustellen. Anderenfalls würde mit jedem neuen Protokoll wiederum grösserer Implementierungsaufwand entstehen. Neue Dienste und neue Terminal-Ausgestaltungen sollen schnell angeboten werden können und zudem nicht von der Terminal-Ausführung abhängig sein.

Eine gewisse Protokollunabhängigkeit kann erreicht werden, indem Kommunikationsvorgänge unter Nutzung von CTI-Applikationen (Computer Telephony Integration) abgebildet werden. Dabei wird der Vermittlungseinheit (Call-Manager) über eine CTI-Schnittstelle (z.B. TAPI, JTAPI, etc.) mitgeteilt, welches Leistungsmerkmal aktiviert werden soll. Üblicherweise sind CTI-Applikationen auf Plattformen mit den entsprechenden Ressourcen (RAM, ROM, Rechnerleistung, usw.) ausgelegt, insbesondere Windows-, Apple- oder Unix-Plattformen, und erlauben die Implementierung von PBX-unabhängigen Telefonie-Applikationen. Eine CTI-Schnittstelle dient der Übertragung von Steuerbefehlen für die PBX-Einheit via LAN von den CTI-Clients her. Als CTI Schnittstelle kommen verschiedene Standards in Frage, z.B. TAPI 1.4, TAPI 2.1 TAPI 3.x, TSAPI, JTAPI. Ein CTI Server ist in der Regel ein normaler IT-Server in einem Netzwerk, z.B. Windows NT oder Unix Plattformen. Er stellt den Benützern der Clients die CTI-Applikation zur Verfügung und erlaubt ihnen via CTI-Schnittstelle eine gewisse Kontrolle über die PBX-Funktionen. CTI-Clients können die auf dem CTI-Server installierten Applikationen ausführen und somit das Verhalten der PBX beeinflussen und steuern. Eine Portierung einer CTI-Applikation auf Endgeräte, welche in einem Gehäuse sowohl die MMI als auch die Kommunikations-Aggregate enthalten (Embedded Devices), ist jedoch nicht ohne weiteres möglich, auch da die meisten Embedded Devices gar nicht mit den entsprechenden Ressourcen ausgestattet sind oder werden können.

Weiter sind Lösungen bekanntgeworden, die die Architektur eines Telekommunikationssystems aufteilen, um eine grössere Flexibilität zu erreichen. So soll gemäss EP-A 0 963 096 mit einer Client/Server-Architekur die Interkonnektion zwischen verschiedenen Funktionalitäts-Inseln verbessert und verteilt angebotene Leistungsmerkmale sollen besser zusammen genutzt werden. Als Client dienen sogenannte Call Coordinator-Einheiten und als Server verschiedene Terminal(typen). Signalisierungs- und Nutzdaten werden dabei gemeinsam übertragen. Auch die US 6,031,836 beschreibt eine Client/Server-Architektur, wobei die Terminals als Apparate mit Web-Browser ausgestaltet sind. Die Schwerpunkte liegen hier bei der Nutzung des Browsers für die Realisierung von Telefonie-Leistungsmerkmalen in einem Nicht-Telefonie-Netzwerk.

Der Erfindung liegt die Aufgabe zugrunde, ein Kommunikationssystem und ein Verfahren zum Betrieb eines Kommunikationssystems anzugeben, bei dem die bereits geschilderten Probleme des Standes der Technik vermieden werden, insbesondere die Implementierung von Leistungsmerkmalen weitgehend unabhängig vom verwendeten Terminal bzw. Kommmunikationsprotokoll möglich ist.

Die Aufgabe wird gelöst durch ein Kommunikationssystem mit den Merkmalen von Anspruch 1. Die Aufgabe wird weiterhin gelöst durch ein Endgerät für den Betrieb mit einem solchen Kommunikationssystem mit den Merkmalen von Anspruch 11. Die Aufgabe wird auch gelöst durch ein Verfahren mit den Merkmalen von Anspruch 12. Vorteilhafte Weiterbildungen des Kommunikations-systems, des Verfahrens und des Endgeräts sind in den abhängigen Ansprüchen, der Beschreibung und der Zeichnung beschrieben.

Erfindungsgemäss werden bei einem Kommunikationssystem für die Telekommunikation die Signalisierungs- und Nutzdaten unabhängig von den MMI-Daten übertragen. Als MMI-Daten werden dabei solche Steuerdaten bezeichnet, die die Interaktion mit dem Benutzer vermitteln, z.B. Mitteilung eines bestimmten Tastendrucks oder Steuerung eines Displays oder Lautsprechers am Endgerät. Zur Verbindungssteuerung mittels den Signalisierungsdaten weist das Kommunikationssystem eine erste Steuereinheit auf, welche im folgenden auch als Call Agent bezeichnet wird. Der Call Agent realisiert eine der Funktionen einer herkömmlichen Vermittlungseinheit, z.B. einer PBX-Einheit. Erfindungsgemäss wird die bei herkömmlichen Kommunikationsanlagen in den Endgeräten enthaltene MMI-Intelligenz zu einer zweiten Steuereinheit zentral zusammengefasst. Diese ist funktional von der ersten Steuereinheit getrennt und kann vorteilhaft unabhängig von dieser weiterentwickelt werden. Diese zweite Steuereinheit übernimmt nun die Steuerung der Interaktion zwischen Benutzer und Endgerät. Die erste Steuereinheit übernimmt als Vermittlungseinheit die Verbindungssteuerung. Indem die erste und die zweite Steuereinheit miteinander zu kommunizieren imstande sind, ist die zweite Steuereinheit über den Verbindungsstatus informiert und kann die entsprechenden Signale an den Benutzer veranlassen bzw. auf Eingaben des Benutzers reagieren. Das Endgerät wird so zur blossen "transparenten" Ein- und Ausgabeeinheit ohne eigene Datenverarbeitungskapazität. Die Zusammenfassung der MMI-Intelligenz zur zweiten Steuereinheit ermöglicht vorteilhaft, neue Leistungsmerkmale durch einen einzigen Eingriff in die zweite Steuereinheit endgeräteunabhängig in das Kommunikationssystem zu integrieren. Kompatibilitätsprobleme werden vermieden. Da das Endgerät keine eigene MMI-Intelligenz aufweisen muss, kann es kostengünstig hergestellt werden und ist flexibel in Systemen mit unterschiedlichem Leistungsumfang einsetzbar. Erfindungsgemäss sind die Funktionen des Endgeräts, d.h. Schnittstelle Mensch-Maschine (MMI-Teil) einerseits und Verbindungssteuerung und Nutzdatenaustausch (Media-Teil) andererseits, auch auf verschiedene Endgeräte aufteilbar. Vorteilhaft können jedoch selbst bei sogenannten "embedded devices" beliebige MMI-Funktionen realisiert werden, ohne das Endgerät hinsichtlich MMI-Intelligenz speziell anpassen zu müssen.

Die zweite Steuereinheit kommuniziert über ein geeignetes im folgenden als User-Interaktions-Protokoll bezeichnetes Protokoll mit dem MMI-Teil der gegebenenfalls an das Kommunikationssystem angeschlossenen Endgeräte. Über ein weiteres Protokoll wird der Datenaustausch mit der ersten Steuereinheit geregelt. Durch die Trennung der zweiten Steuereinheit von der ersten Steuereinheit können diese Protokolle, insbesondere das User-Interaktions-Protokoll, unabhängig vom Call-Control-Protokoll einheitlich gestaltet werden, wobei zur Anbindung verschiedener Endgeräte an das Kommunikationssystem nach wie vor unterschiedliche Call-Control-Protokolle verwendet sein können. Damit gelingt unabhängig vom Call-Control-Protokoll eine Integration verschiedener Leistungsmerkmale. Als User-Interaktions-Protokoll werden vorzugsweise XML (eXtended Markup Language) basierende Protokolle verwendet, z.B. HTML oder WML (Wireless Markup Language), das ein Bestandteil des WAP (Wireless Access Protocol) Standard ist. Auch ein Proprietäres Stimuli Protokoll kann verwendet werden. Beispiele für Call-Controll-Protokolle sind die bekannten Protokolle MGCP, H.323, H.450, SIP, wobei erfindungsgemäss jedoch keine Benutzerinteraktionen bzw. MMI-Daten über dieses Protokoll signalisiert werden bzw. dennoch signalisierte MMI-Daten von der ersten Steuereinheit nicht ausgewertet werden.

Erste und zweite Steuereinheit kommunizieren miteinander über ein CTI-Protokoll, z.B. JTAPI, TAPI oder vergleichbare Protokolle.

Ausführungsbeispiele der Erfindung sind in der Zeichnung gezeigt und nachfolgend beschrieben. Dabei zeigen rein schematisch:
- Fig. 1: Die Architektur des erfindungsgemässen Kommunikationssystems im Grundprinzip;
- Fig. 2: eine mögliche Hardwarekonfiguration eines erfindungsgemässen Kommunikationssystems;
- Fig. 3: funktionale Komponenten des Systems und Definition der Datenflüsse gemäss der Erfindung;
- Fig. 4: ein erfindungsgemässes Terminal mit funktionaler Aufteilung in einen Media- und einen MMI-Teil;
- Fig. 5: den Datenfluss zwischen Terminal-Manager bzw. Call-Agent einerseits und verschiedenen Terminal-Typen;
- Fig. 6a: Sequentielle Darstellung eines abgehenden Verbindungsaufbaus in einem erfindungsgemässen Kommunikationssystem;
- Fig. 6b: Sequentielle Darstellung einer ankommenden Verbindung in einem erfindungsgemässen Kommunikationssystem.

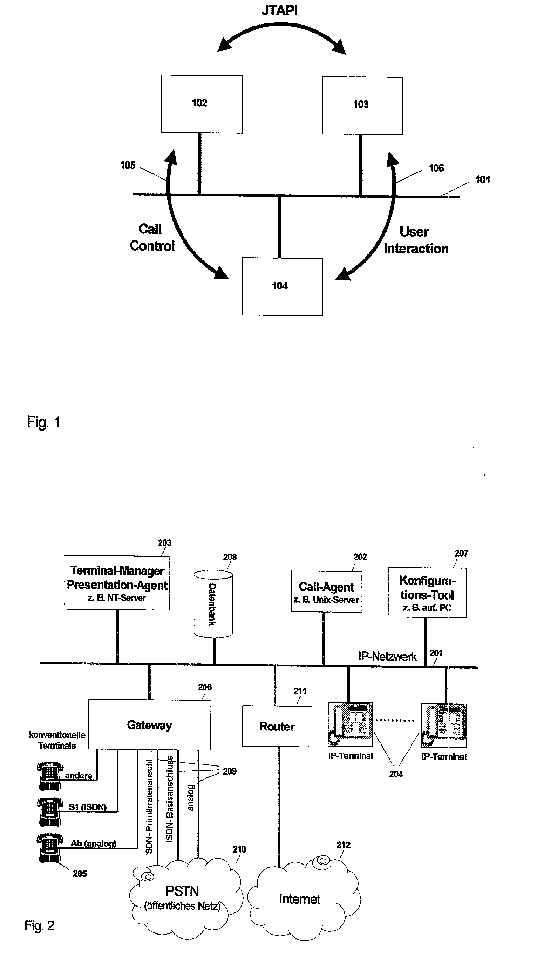

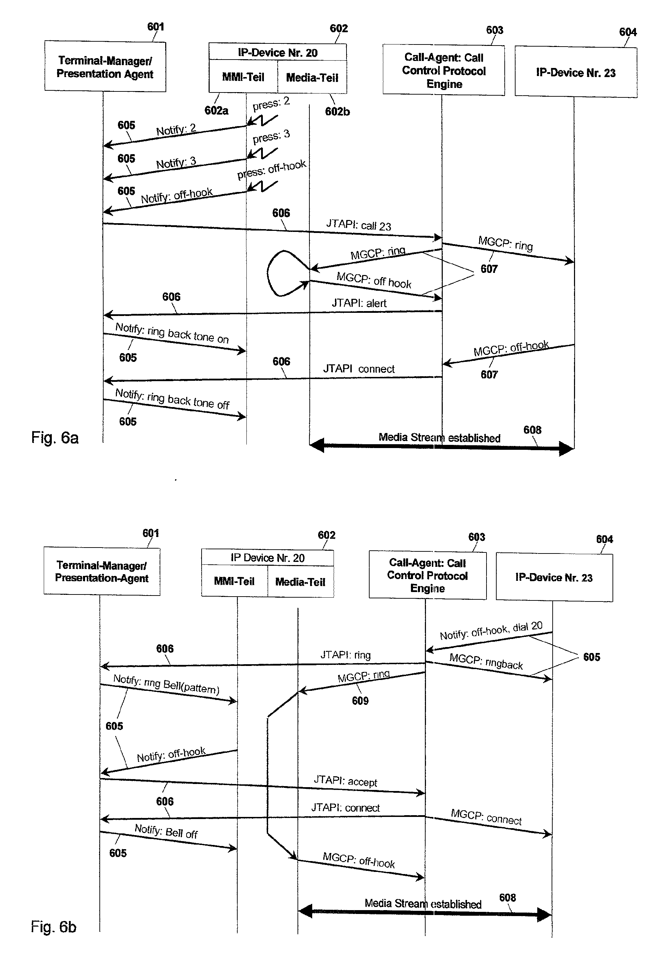

Figur 1 zeigt die grundsätzliche Architektur eines erfindungsgemässen Kommunikationssystems mit einer an ein Datennetz 101 angeschlossenen ersten Steuereinheit 102, auch als Call Agent bezeichnet, und zweiten Steuereinheit 103. Das Datennetz 101 ist vorzugsweise ein Internetprotokoll basiertes Netz (IP-Netz), es kann sich aber auch um ein leitungsvermitteltes oder nicht drahtgebundenes Telekommunikationsnetz handeln. An das Datennetz 101 ist ein Endgerät 104 angeschlossen, mit dessen Hilfe Informationen ein- und ausgegeben und über das Datennetz 101 mit weiteren hier nicht dargestellten Endgeräten ausgetauscht werden können. Die erste Steuereinheit 102 dient erfindungsgemäss zur Steuerung des Verbindungsaufbaus und -abbaus. Dazu werden zwischen der ersten Steuereinheit 102 und den beteiligten Endgeräten 104 Signalisierungsdaten 105 über ein Call-Control-Protokoll übertragen. Als Call-Control-Protokoll dient beispielsweise H.323, H.450, SIP, MGCP, Megaco, wobei im Falle der Erfindung keine Benutzerinteraktionen bzw. MMI-Daten über das Protokoll signalisiert werden bzw. diese Daten nicht ausgewertet werden. Nach erfolgter Herstellung einer Kommunikationsverbindung werden Nutzdaten, z.B. Sprache oder sonstige Informationen, zwischen zwei oder mehr Endgeräten übertragen, z.B. mittels der Protokolle RTP/RTPC. Die Interaktion des Kommunikationssystems mit dem Benutzer wird erfindungsgemäss mit der zweiten Steuereinheit 103 realisiert. MMI-Daten 106, welche den Zustand der angeschlossenen Endgeräte beschreiben und/oder beeinflussen, werden zwischen dem betreffenden Endgerät 104 und zweiter Steuereinheit 103 mittels eines User-Interaction-Protokolls übertragen. Es werden unter anderem die Informationen wie in Fig. 6a, 6b ausgetauscht. Die zweite Steuereinheit 103 wertet die von den Endgeräten kommenden Zustandsmeldungen (MMI-Daten 106) aus, z.B. die Meldung über die betätigten Tasten oder sonstige Geräteeinstellungen, z.B. Gabelkontakt, gewählte Nummern etc., und veranlasst die erste Steuereinheit gegebenenfalls zum Verbindungsaufbau oder -abbau. Die erste Steuereinheit 102 kommuniziert über eine CTI-Schnittstelle, z. B. JTAPI (Java Telephony Application Programming Interface) mit der zweiten Steuereinheit 103. In der umgekehrten Richtung sendet die zweite Steuereinheit 103 an das Endgerät 104 Meldungen in Form von MMI-Daten 106, die das Endgerät 104 zur Ausgabe bestimmter Signale an den Benutzer veranlassen oder den Zustand des Endgeräts 104 modifizieren, z.B. Rufkontrollton, Besetztkontrollton, Lautsprechereinstellungen, Displayansteuerung etc.

Erfindungsgemäss sind die Datenströme der Media-Daten (Nutz- und Signalisierungsdaten 105) und der MMI-Daten 106 voneinander getrennt und werden über funktional getrennte Einheiten, die erste bzw. zweite Steuereinheit 102 bzw. 103, abgewickelt.

Das hier vorgeschlagene Konzept erlaubt, sehr schnell und einfach neue Terminaltypen, auch nach neuen Grundkonzepten, zu entwickeln. Damit sind zukünftige Entwicklungen nicht durch einen Leistungsumfang vorhandener Protokolle gebunden. Die Einführung neuer Funktionen wird stark erleichtert. Daraus resultiert ein grosser und zu Beginn der Konzeptfestlegungen möglicherweise weitgehend unbekannter Leistungsumfang der Vermittlungseinrichtungen. Ein weiterer Vorteil liegt darin, dass die Interaktion des Benutzers mit dem System nicht zwingend auf demjenigen Terminal-Teil erfolgen muss, an welchem sich Mikrophon und Lautsprecher befinden. Beispielsweise kann zur Nutzdateneingabe und -ausgabe ein analoges Telefon verwendet und die Interaktion mit dem Benutzer mit einer zugeordenten Einheit realisiert werden, die sich im Netz befindet (z. B. ein Palmtop mit Wireless-Anbindung).

Die Erfindung ist allgemein nutzbar, wird im folgenden aber speziell für IP-basierende PBX-Systeme erörtert.

Figur 2 zeigt eine mögliche Hardware- und Installationskonfiguration eines Kommunikationssystems, bei der die zweite Steuereinheit 203 zur Realisierung der Benutzerinteraktion erfindungsgemäss von der ersten Steuereinheit 202 zur Verbindungssteuerung abgetrennt ist. Die Kommunikation zwischen den einzelnen Einheiten erste und zweite Steuereinheit 202, 203 und den direkt oder über ein Gateway 206 angeschlossenen Endgeräten 204, 205 geschieht über ein Datennetz, hier ein IP-Netzwerk 201. Die in die Untereinheiten Terminal-Manager und Presentation-Agent untergliederte zweite Steuereinheit 203 sowie die erste Steuereinheit 202 (Call-Agent) laufen je auf einem eigenen Server. Dieser Server kann eine MS-Windows oder UNIX-Plattform sein. Eine Datenbank 208 ist ebenfalls auf einem eigenen Server installiert. Der Gateway 206 erlaubt als Server den Anschluss traditioneller Endgeräte an das IP-Netz 201, die entweder konventionelle (Plain Old Telephony Service: POTS), ISDN, oder proprietäre Apparatetypen sein können. Die Verbindung über Amtsleitungen 209 ins öffentliche Telefonnetz 210 (PSTN) geschieht ebenfalls über den Gateway 206. Mehrere IP-Terminals 204 sind ins System eingebunden, indem sie direkt ans LAN oder IP-Netzwerk 201 angeschlossen sind. Ein Konfigurations-Tool 207, auf einem PC oder einer Workstation laufend, ist ebenfalls ans Netz 201 angeschlossen. Mit einem Router 211 kann eine Verbindung zum Internet 212 hergestellt werden Die einzelnen funktionalen Komponenten können auch in einer anderen als in Fig. 2 dargestellten Hardwarekonfiguration installiert sein.

Als Endgeräte 204, 205 können verschiedene Terminal-Typen eingesetzt werden. Bei Analogtelefonen erfolgt die Übertragung von Signalisierungsdaten und Sprache "inband". Normalerweise haben analoge Telefone ein sehr einfaches MMI, welches eine Tastatur und eventuell ein kleines Display beinhaltet. Bei digitalen, vorzugsweise ISDN-Terminals werden Signalisierungs- und Nutzdaten getrennt behandelt. Für die Signalisierung wird ein Call-Control Protokoll verwendet, im Falle von ISDN das Protokoll DSS1. Bei IP-Terminals werden IP-Netzwerke als Übertragungsmedium verwendet. Üblicherweise werden IP-Terminals an LAN-Netzwerke angeschlossen. Die Signalisierungs- und die Nutzdaten werden in bekannter Weise in getrennten Datenpaketen transportiert. Als Call-Controll-Protokoll sind H.323, H.450, MGCP, SIP, usw. im Einsatz.

Der Voice-Gateway 206 erlaubt die Verbindung der "traditionellen Telefoniewelt" (Leitungsvermittlung) mit der Datenwelt (Paketvermittlung). Dabei werden Signalisierungs- und Nutzdaten auf bekannte Weise in die jeweils notwendigen Protokolle und Formate umgesetzt.

Erste und zweite Steuereinheit 202, 203 kommunizieren miteinander vorzugsweise nach dem CTI-Prinzip (CTI: Computer Telephony Integration).

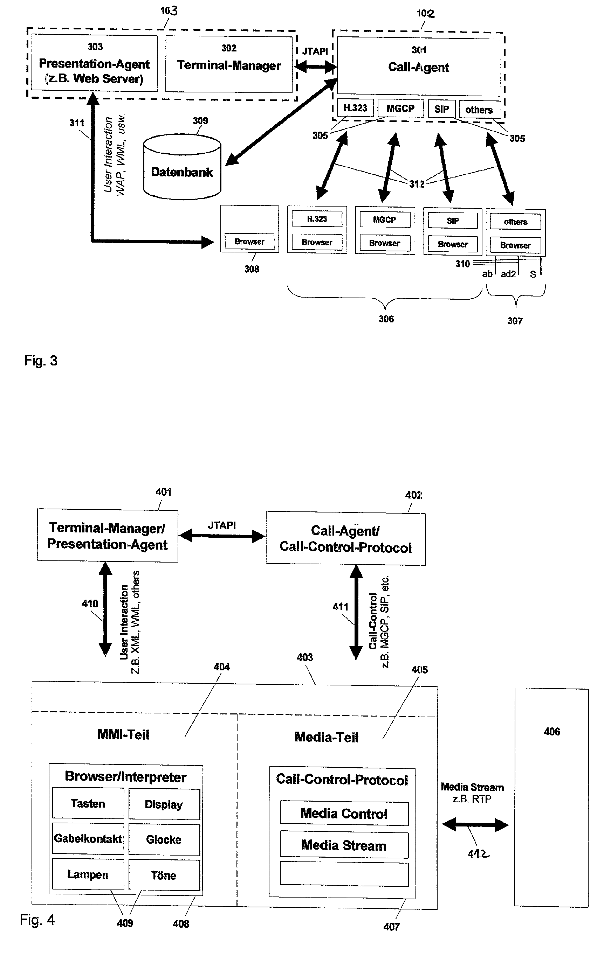

Fig. 3 zeigt die funktionalen Komponenten des Kommunikationssystems und die Datenflüsse zwischen diesen. Die hier aufgeführten Komponenten sind nicht zwingend als physikalisch eigenständige Komponenten realisiert. Das Kommunikationssystem umfasst wenigstens eine erste Steuereinheit 102 mit dem Call Agent 301 und Schnittstellen 305 und eine zweite Steuereinheit 103, die hier in eine erste und eine zweite Untereinheit 302 bzw. 303 untergliedert ist. An das Kommunikationssystem sind verschiedene Terminals 306, 308 und Gateways 307 mit Teilnehmerports 310, z.B. ab-, ad2-, S-Schnittstellen, angeschlossen. In einer Datenbank 309 sind die persistenten Daten der Anlage gespeichert, die beispielsweise nach Netzausfällen noch zur Verfügung stehen müssen, z.B. Konfiguration der Anlage, Kurzwahlnummern, Berechtigungen.

Die erste Steuereinheit 301, der sogenannte Call-Agent, realisiert die Telefoniesignalisierung, d.h. Aufbau, Abbau, Leistungsmerkmal-Aktivierung und dergleichen. Zudem erlaubt er die Integration verschiedener Call-Control-Protokolle 312, so dass Terminals 306, 308 und Gateways 307 mit unterschiedlichen Protokollen (MGCP, H.323, SIP, etc.) in das System eingebunden werden und miteinander über den Call-Agent 301 kommunizieren können. Die Integration verschiedener Protokolle ist durch verschiedene Schnittstellen 305 des Call Agents 301 angedeutet. Eine CTI-Schnittstelle 304 zwischen Call Agent 301 und der zweiten Steuereinheit 302, 303 erlaubt die Steuerung des Call-Agents 301 von den Terminals 306, 308, wobei die MMI-Daten über das User-Interaction Protokoll 311 an die zweite Steuereinheit 302, 303 vermittelt und von dieser dem Call Agent 301 mitgeteilt werden. Bei einer IP-basierten Lösung ist der Call-Agent 301 auf einem Server in einem IP Netzwerk installiert, siehe Fig. 2. Der Call-Agent 301 könnte alternativ auch eine traditionelle PBX sein, die über einen Gateway mit der IP-Welt verbunden ist.

Die erste Untereinheit 302 der zweiten Steuereinheit, im folgenden Terminal-Manager 302, beinhaltet in das Kommunikationssystem ausgelagert die eigentliche Intelligenz der Terminals 306, 308. Der Terminal Manager 302 verwaltet für jedes Terminal die Zustände und notwendigen Daten. Via die CTI-Schnittstelle 304 kommuniziert der Terminal-Manager 302 mit dem Call-Agent 301. Der Terminal-Manager 302 offeriert zudem der zweiten Untereinheit 303, im folgenden Presentation-Agent 303, die notwendige Applikations-Logik für die Intelligenz der Terminals. Darüber hinaus bietet der Terminal-Manager 302 nicht nur die traditionellen Telefonie-Leistungsmerkmale an, sondern erlaubt auch die Einbindung von neuen Services. Der Presentation-Agent 303 steuert die Interaktion mit den Terminals und bringt die vom Terminal-Manager 302 offerierten Services zu den einzelnen Terminals. Als Kommunikations-Steuerung kann zum Beispiel ein Internet-Browser, ein WAP-Browser, z.B. ein proprietärer Browser oder eine Stimuli-Lösung, oder gewisse Teile davon genutzt werden.

Der Gateway 307 erlaubt den Anschluss konventioneller (nicht IP-) Terminals an das IP-basierende System. Falls es sich dabei um Geräte mit einer Anzeigemöglichkeit handelt, kann der gleiche Mechanismus wie bei den IP-Terminals angewendet werden. Der Browser läuft in diesem Fall im Gateway 307 und signalisiert MMI-Informationen mit dem endgerätespezifischen Protokoll. Somit ergibt sich in Bezug auf das MMI praktisch kein Unterschied zu IP-Terminals.

Das Embedded IP-Device 308 ist zum Beispiel ein IP-Terminal, ein PC oder ein Palmtop, wobei letztere mit dem IP-Netz verbunden werden und die Interaktionsmechanismen des Presentation-Agents 303 unterstützen müssen. Erfindungsgemäss kann auch ein analoges Telefon an einem IP-Gateway mit erweiterten Services benutzt werden.

Figur 4 zeigt die Struktur eines erfindungsgemässen Endgeräts, insbesondere eines embedded IP-Devices. Das Endgerät ist in zwei klar unterschiedlich zu betrachtende unabhängige Teile für die MMI und die Media-Daten unterteilt. Der Media-Teil 405 besteht aus der Call-Control-Protokoll-Einheit 407 und ist zusammen mit dem Call-Agent 402 durch Austausch von Signalisierungsdaten 411 über das Call-Control Protokoll vor allem für den Verbindungsauf- und Abbau besorgt. Nach erfolgten Verbindungsaufbau wird der Nutzdatenstrom 412 zu einem weiteren Endgerät 406 durchgeschaltet. Der MMI-Teil 404 besteht aus einem Browser 408, der die entsprechenden Services, die von der zweiten Steuereinheit 401, d.h. vom Terminal-Manager über den Presentation-Agent, durch Austausch von MMI-Daten 410 über das User-Interaction-Protokoll angeboten werden, am Endgerät anzeigt und mittels entsprechender Bedienungselemente 409, BenutzerInteraktionen vornimmt und an den Presentation-Agent/Terminal-Manager 401 zurücksignalisiert. Das Endgerät ist dabei vorzugsweise eine reine Anzeige- und Eingabeeinheit, die, was das MMI betrifft, keine Intelligenz mehr besitzt.

Der MMI-Teil 404 kontrolliert Bedienungselemente 409 wie z.B. Tasten, Anzeige, Gabelkontakt (hook), Glocke (bell), Lampen, Töne. Er besteht aus einem Browser/Interpreter, welcher Meldungen zwischen dem Terminal und dem Terminal-Manager/Presentation-Agent austauscht. Dabei werden Meldungen einfach vom Browser/Interpreter 408 interpretiert und die entsprechende Aktion ausgeführt, z.B. Anzeige eines neuen Displayinhalts, Taste 5 wurde gedrückt und dergleichen. Dabei analysiert der Browser 408 oder das Endgerät nicht die Bedeutung des Meldungsinhaltes.

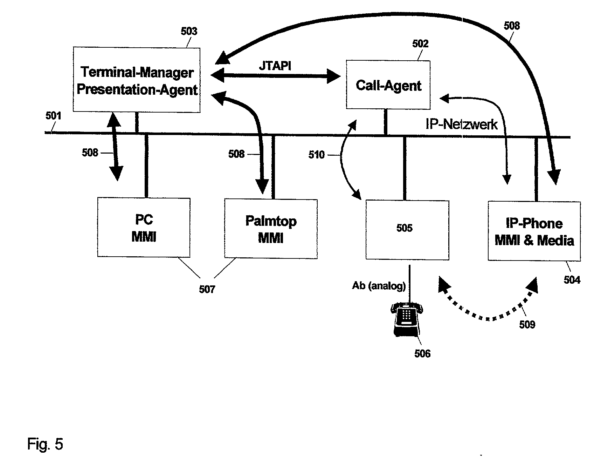

Fig. 5 zeigt den Datenfluss über das Datennetz 501, hier ein IP-Netz, zwischen Terminal-Manager 503, Presentation Agent und Call-Agent 502 sowie zwischen verschiedenen Terminal-Typen 504, 506, 507. Wie bereits beschrieben, werden zwischen Call Agent 502 und den Media-Teilen der Endgeräte Signalisierungsdaten 510 ausgetauscht. Die zweite Steuereinheit 503 mit Terminal Manager und Presentation Agent tauscht mit den MMI-Teilen der Endgeräte MMI-Daten 508 aus. Der MMI-Teil wird beispielsweise auf einem PC oder einem Palmtop 507 betrieben. Der Media-Teil läuft via einen Gateway 505 auf einem analogen Telefonapparat 506. Zusammen bilden PC oder Palmtop und analoger Telefonapparat ein erfindungsgemässes Endgerät. Die MMI- und Media-Teile können wie beim IP-Endgerät 504 auch auf demselben Gerät installiert sein.

Erfindungsgemäss ist es auch möglich, dass der MMI-Teil parallel auf verschiedenen Einheiten und der Media-Teil auf einem Gateway läuft.

In den Figuren 6a und 6b ist der Ablauf einer ankommenden bzw. abgehenden Verbindung in einem erfindungsgemässen Kommunikationssystem sequentiell dargestellt. Bei einer abgehenden Verbindung (Fig. 6a) ruft ein erstes Endgerät 602, hier ein IP-Terminal mit der Nummer 20, ein zweites Endgerät 604 an, hier ein IP-Terminal mit der Nummer 23. Dabei laufen sämtliche Benutzerinteraktionen zwischen dem MMI-Teil 602a des Endgeräts 602 und der zweiten Steuereinheit 601 ab. Die entsprechenden MMI-Daten 605 werden über ein geeignetes User-Interaction-Protokoll zwischen dem MMI-Teil 602a und der zweiten Steuereinheit 601 übertragen.

Die erste Steuereinheit 603, der Call-Agent, kommuniziert über eine CTI-Schnittstelle, z. B. JTAPI (Java Telephony Application Programming Interface), mit der zweiten Steuereinheit 601, dem Terminal-Manager/Presentation-Agent zum Austausch von Daten 606, z.B. Befehlen für den Verbindungsaufbau und -abbau, Anrufweiterleitungsdaten. Die Übertragung der eigentlichen Nutzdaten 608, der sogenannte Media Stream, wird mittels eines Call-Control-Protokolls von der ersten Steuereinheit 603 gesteuert. Beispielsweise wird als Call Control Protokoll das von der Internet Engineering Task Force (IETF) standardisierte Media Gateway Control Protocol (MGCP) verwendet. In diesem Protokoll werden neben den Signalisierungsdaten auch MMI-Daten übertragen. Erfindungsgemäss führt jedoch der Media-Teil 602b des ersten Endgeräts 602 aufgrund einer solchen eingehenden MGCP MMI-Meldung 607 "ring" (Anruf) keine Aktionen aus, sondern sendet direkt eine Meldung 607 "off-hook" (Abgehoben) an den Call-Agent 603 zurück. Wird am zweiten Endgerät 604 abgehoben und dies dem Call Agent 603 mitgeteilt (Meldung MGCP "off-hook"), d.h. sobald beide Endgeräte 602, 604 den Status "off-hook" haben, wird eine Meldung 606 (JTAPI: "connect") von der ersten an die zweite Steuereinheit 603 bzw. 601 gesendet, welche das Bereitstehen der Verbindung anzeigt. Die zweite Steuereinheit 601 veranlasst darauf durch Meldungen 605, dass die Ruftöne am ersten Endgerät 602 ausgeschaltet werden. Der Nutzdatenstrom 608 wird sodann durchgeschaltet.

Bei einer ankommenden Verbindung (Fig. 6b) wählt das zweite Endgerät 604 die Nummer des ersten Endgeräts 602. Wie bereits in Fig. 6a gezeigt, werden sämtliche Benutzerinteraktionen durch Austausch von MMI-Daten 605 werden über den MMI-Teil 602a des Endgeräts 602 erledigt. Vom Call Agent 603 an den Media-Teil 602b des ersten Endgeräts 602 gesendete MMI-Daten 609 (hier: MGCP "ring") werden ignoriert. Die Erzeugung entsprechender Interaktionssignale, z.B. Rufton, wird durch die zweite Steuereinheit 601, die von der ersten Steuereinheit durch eine entsprechende Meldung 606 (JTAPI: "ring") informiert wurde, durch Senden von MMI-Daten 605 (notify: "ring") an den MMI-Teil 602a veranlasst. Der Nutzdatenstrom 608 wird mittels des Call-Control-Protokolls gesteuert (in diesem Falle MGCP).

Weitere Abläufe, wie Makeln, Rufumleitung, usw., werden durch entsprechende Abwandlung der Abläufe aus Fig. 6a, 6b durchgeführt. Erfindungsgemäss gibt es keine direkte funktionelle Verknüpfung zwischen den MMI- und Media-Teilen eines Endgeräts. Als Konsequenz ist es auch möglich diese beiden Teile physikalisch getrennt, d. h. auf verschiedenen Geräten zu betreiben. Das erfindungsgemässe Kommunikationssystem kann auch dazu dienen, weitere Geräte anzusteuern, um einem Betrachter/Benutzer bestimmte Informationen zu signalisieren, z.B. Bildschirme oder akustische Signaleinrichtungen. Beispielsweise kann über eine Eingabe an einem Telefon ein Horn in einer Fabrikhalle angesteuert werden, um bestimmte Signale auszugeben.

Die folgende Tabelle zeig Beispiele für erfindungsgemässe Endgeräte, bei denen MMI-Teil und Media-Teil durch eine gemeinsame oder unterschiedliche physikalische Komponenten realisiert sind:

| MMI-Teil | Media-Teil | MMI und Media-Anordnung |
|---|---|---|
| IP-Phone | IP-Phone | In einem Gerät |
| PC (Teil Bildschirm und Tastatur) | PC (Teil Lautsprecher, Mikrofon und Soundkarte) | Im gleichen PC |
| UMTS- oder GPRS-Mobiltelefon | UMTS- oder GPRS-Mobiltelefon | Im gleichen Mobiltelefon |
| Palmtop-PC | GSM- Mobiltelefon | Separate Apparateteile |
| Palmtop-PC | Proprietäres Terminal einer PBX | Separate Apparateteile |
| Palmtop-PC | Analoger Apparat (via Gateway) | Separate Apparateteile |
| Künftiges Ein- und Ausgabegerät | Künftiges Kommunikationsgerät | Offen |
| Verteilte Ein- und Ausgabe-Elemente | Künftige Einheiten | Offen |

## Patentansprüche

1. Kommunikationssystem für die Vermittlung von Sprache und/oder Daten mit einer ersten Steuereinheit (102, 202, 301, 402, 502, 603) (Call Agent) zur Steuerung von Kommunikationsverbindungen zwischen wenigstens zwei Endgeräten und einer funktional von der ersten Steuereinheit (102, 202, 301, 402, 502, 603) getrennten zweiten Steuereinheit (103, 203, 302/303, 401, 503, 601) zur Realisierung der Interaktion zwischen Benutzer und Endgerät, wobei die erste und die zweite Steuereinheit miteinander zu kommunizieren imstande sind.

2. Kommunikationssystem nach Anspruch 1, **dadurch gekennzeichnet, dass** die erste und die zweite Steuereinheit (102, 202, 301, 402, 502, 602; 103, 203, 302/303, 401, 503, 601) jeweils durch einen Server, vorzugsweise einer MS-Windows oder UNIX-Plattform, realisiert sind, die über ein paket- oder leitungsvermitteltes Netzwerk miteinander kommunizieren.

3. Kommunikationssystem nach Anspruch 1 oder 2, **dadurch gekennzeichnet, dass** die zweite Steuereinheit (103, 203, 302/303, 401, 503, 601) eine erste Untereinheit (302) (Terminal-Manager) und eine mit dieser gekoppelte zweite Untereinheit (303) (Presentation-Agent) umfasst, wobei die erste Untereinheit (302) Datenverarbeitungskapazität und entsprechende Steuerprogramme zur Verwaltung von Zuständen und Daten der Endgeräte aufweist und wobei die zweite Untereinheit (303) den Datentransfer zwischen der ersten Untereinheit (302) und den Endgeräten steuert.

4. Kommunikationssystem nach Anspruch 3, **dadurch gekennzeichnet, dass** die zweite Untereinheit (303) über einen Browser ansteuerbar ist, z.B. durch einen Internet-Browser, einen WAP-Browser oder einem proprietären Browser.

5. Kommunikationssystem nach Anspruch 3 oder 4, **dadurch gekennzeichnet, dass** die Kommunikation zwischen der zweiten Steuereinheit (103, 203, 302/303, 401, 503, 601) und den Endgeräten nach einem User-Interaction Protokoll abläuft, welches vorzugsweise der WAP-Standard (Wireless Access Protocol) oder ein Teil davon, HTML, XML oder ein Proprietäres Stimuli Protokoll ist.

6. Kommunikationssystem nach einem der vorangegangenen Ansprüche, **dadurch gekennzeichnet, dass** die erste Steuereinheit (102, 202, 301, 402, 502, 603) nach einem oder verschiedenen Kommunikationsprotokollen (Call-Control-Protokollen) übertragene Signalisierungsdaten, insbesondere für den Verbindungsaufbau und Verbindungsabbau, zwischen den Endgeräten zu vermitteln imstande ist.

7. Kommunikationssystem nach Anspruch 6, **dadurch gekennzeichnet, dass** die erste Steuereinheit (102, 202, 301, 402, 502, 603) verschiedene Call-Control-Protokolle zu integrieren imstande ist zur Einbindung von mit unterschiedlichen Call-Control-Protokollen arbeitenden Endgeräten und/oder Gateways in das Kommunikationssystem.

8. Kommunikationssystem nach Anspruch 6 oder 7, **dadurch gekennzeichnet, dass** wenigstens eines der Call-Control-Protokolle DSS1, QSIG, MGCP, H.323 oder SIP ist.

9. Kommunikationssystem nach einen der vorangegangenen Ansprüche, **dadurch gekennzeichnet, dass** die erste Steuereinheit (102, 202, 301, 402, 502, 603) und die zweiten Steuereinheit (103, 203, 302/303, 401, 503, 601) über eine CTI-Schnittstelle, vorzugsweise JTAPI (Java Telephony Application Programming Interface), miteinander zu kommunizieren imstande sind zum Austausch von Daten, die den Zustand der Verbindung und/oder wenigstens eines Endgeräts und Benutzeraktionen angeben.

10. Kommunikationssystem nach einem der vorangegangenen Ansprüche, **dadurch gekennzeichnet, dass** die Datenübermittlung zwischen der ersten und der zweiten Steuereinheit (102, 202, 301, 402, 502, 603; 103, 203, 302/303, 401, 503, 601) und den gegebenenfalls vorhandenen Endgeräten über ein Internet-Protokollbasiertes Datennetz (IP-Netz) erfolgt.

11. Endgerät für den Betrieb mit einem Kommunikationssystem nach einem der vorangegangenen Ansprüche, **dadurch gekennzeichnet, dass** eine erste Funktionseinheit (405, 602b) (Media-Teil) in Zusammenwirkung mit der ersten Steuereinheit (102, 202, 301, 402, 502, 603) des Kommunikationsnetzes den Aufbau und Abbau einer Kommunikationsverbindung zu steuern imstande ist und eine davon funktionell getrennte zweite Funktionseinheit (404, 602a) (MMI-Teil) in Zusammenwirkung mit der zweiten Steuereinheit (103, 203, 302/303, 401, 503, 601) des Kommunikationsnetzes Bedienungselemente des Endgeräts zu steuern und zu überwachen imstande ist.

12. Verfahren zum Betrieb eines Kommunikationssystems für die Telekommunikation, bei welchem zur Steuerung von Kommunikationsverbindungen Signalisierungsdaten und zur Realisierung einer Interaktion mit einem Benutzer MMI-Daten übertragen werden, **dadurch gekennzeichnet, dass** Signalisierungsdaten und MMI-Daten in voneinander getrennten Datenströmen geführt werden.

13. Verfahren nach Anspruch 12, **dadurch gekennzeichnet, dass** Signalisierungsdaten und MMI-Daten mit voneinander funktional unabhängigen Einheiten verarbeitet werden.

14. Verfahren nach Anspruch 13, **dadurch gekennzeichnet, dass** zur Verarbeitung von MMI-Daten notwendige Datenverarbeitungskapazität und -programme weitgehend vollständig durch eine zentrale Steuereinheit (103, 203, 302/303, 401, 503, 601) bereitgestellt werden, so dass die durch gegebenenfalls an das Kommunikationssystem angeschlossene Endgeräte bereitzustellende Datenverarbeitungskapazität und -programme zur Verarbeitung von MMI-Daten reduziert werden kann oder auf diese verzichtet werden kann.
